# EUROPEAN PATENT SPECIFICATION

(11) **EP 3 663 968 B1**
(45) Date of publication and mention of the grant of the patent: **15.04.2026**
(21) Application number: 19207721.2
(22) Date of filing: 07.11.2019
(51) Int. Cl.: G06V 40/20

(54) **DISPLAY METHOD, DISPLAY PROGRAM, AND INFORMATION PROCESSING APPARATUS**
ANZEIGEVERFAHREN, ANZEIGEPROGRAMM UND INFORMATIONSVERARBEITUNGSVORRICHTUNG
PROCÉDÉ D'AFFICHAGE, PROGRAMME D'AFFICHAGE ET APPAREIL DE TRAITEMENT D'INFORMATIONS

(30) Priority: 05.12.2018 JP 2018228225
(43) Date of publication of application: 10.06.2020
(73) Proprietor: FUJITSU LIMITED, Kanagawa 211-8588 (JP)
(72) Inventor: KUBOTA, Kazumi, Kawasaki-shi,, Kanagawa 211-8588 (JP); NAITO, Hirohisa, Kawasaki-shi,, Kanagawa 211-8588 (JP); SHIMIZU, Satoshi, Toyama, 939-2366 (JP)
(74) Representative: Haseltine Lake Kempner LLP

(56) References cited:
- US-A1- 2009 220 124
- US-A1- 2010 303 303
- US-A1- 2016 296 795

## Description

### FIELD

Embodiments discussed herein relate to a display method and the like.

### BACKGROUND

As artistic gymnastics, men perform six events of the floor exercise, the pommel horse, the still rings, the vault, the parallel bars, and the horizontal bar, and women perform four events of the vault, the uneven parallel bars, the balance beam, and the floor exercise. In the events except for the vault of both men and women, one exercise is made up of performing a plurality of elements in succession.

The score of the exercise is calculated by a total of a D (difficulty) score and an E (execution) score. For example, the D-score is a score calculated based on the recognition or non-recognition of the element. The E-score is a score calculated by a point-deduction scoring system depending on the completeness of the element. The recognition or non-recognition of the element and the completeness of the element are determined by visual observation of juries based on a rule book in which scoring rules are described.

In addition, regarding the D-score, limited to immediately after displaying the score or before displaying the score of the next gymnast or the team at the latest, inquiries of the score are allowed. Only the coach who is permitted to enter the competition area has a right to make inquiries. All inquiries need to be judged by the superior jury, and the video of the video-captured gymnast is checked and whether the score is appropriate is discussed. Furthermore, for the purpose of assisting the juries who score artistic gymnastics, there has been a technology in which a competitor in exercise is sensed by a 3D sensor and a 3D model of the competitor corresponding to the result of sensing is displayed on a display screen. In addition, as other technologies, there have also been technologies disclosed in Japanese Laid-open Patent Publication No. 2003-33461, Japanese Laid-open Patent Publication No. 2018-68516, and Japanese Laid-open Patent Publication No. 2018-86240, for example.

US 2016/296795 A1 discloses a method for analyzing sports exercises, in particular golf swings.

US 2009/220124 A1 relates to motion capture and analysis of athletes' performance for the purpose of quantifying training and/or scoring of judged events, particularly including events such as diving, gymnastics, figure skating and ice dancing.

US 2010/303303 A1 also relates to pose and action recognition in motion data of performing athletes.

### TECHNICAL PROBLEM

When a jury scores a scoring competition, by playing back a video or the like, detailed consideration may be given to each element in the exercise. In response to an inquiry from a gymnast, by playing back the video or the like, consideration may be given again to the element that is a subject of inquiry. As just described, the jury scores, by utilizing the video or the like, by checking a state of details of the gymnast with the scoring reference.

As for evaluation indexes concerning the scoring reference, it is conceivable to assist the jury by performing auxiliary display for grasping a state of the details of the gymnast. At this time, the inventors have noticed that the work of selecting the evaluation indexes to observe out of a number of evaluation indexes is cumbersome for the jury.

Accordingly, it is desirable to provide a display method, a display program, and an information processing apparatus capable of assisting the work of selecting the evaluation indexes concerning the scoring reference in the scoring competition.

### SUMMARY

The scope of the present invention is defined by the appended claims.

### BRIEF DESCRIPTION OF DRAWINGS

FIG. 1 is a diagram for explaining a reference art;
FIG. 2 is a diagram illustrating a configuration of a system according to a present embodiment;
FIG. 3 is a functional block diagram illustrating a configuration of an element recognition device in the present embodiment;
FIG. 4 is a diagram illustrating one example of a data structure of a sensing DB in the present embodiment;
FIG. 5 is a diagram illustrating one example of a data structure of joint definition data in the present embodiment;
   structure of a joint position DB in the present embodiment;
FIG. 7 is a diagram illustrating one example of a data structure of a 3D model DB in the present embodiment;
FIG. 8 is a diagram illustrating one example of a data structure of element dictionary data in the present embodiment;
FIG. 9 is a diagram illustrating one example of a data structure of an element-recognition result DB in the present embodiment;
FIG. 10 is a diagram illustrating one example of a display screen generated by an information processing apparatus in the present embodiment;
FIG. 11 is a diagram illustrating one example of a comparison result of the display screens;
FIG. 12 is a diagram illustrating one example of 3D model videos in a case where an icon has been selected;
FIG. 13 is a diagram illustrating a configuration of the information processing apparatus in the present embodiment;
FIG. 14 is a diagram illustrating one example of a data structure of a video DB in the present embodiment;
FIG. 15 is a diagram illustrating one example of a data structure of an icon definition table;
FIG. 16 is a diagram illustrating one example of a data structure of an evaluation index table;
FIG. 17 is a flowchart illustrating a processing procedure of the information processing apparatus in the present embodiment;
FIG. 18 is a diagram illustrating one example of a hardware configuration of a computer that implements the functions the same as those of the element recognition device in the present embodiment; and
FIG. 19 is a diagram illustrating one example of a hardware configuration of a computer that implements the functions the same as those of the information processing apparatus in the present embodiment.

### DESCRIPTION OF EMBODIMENTS

Preferred embodiments will be explained, by way of example only, with reference to accompanying drawings. The invention, however, is not intended to be limited by the embodiment.

Before describing the present embodiment, a reference art will be described. This reference art is not a related art.

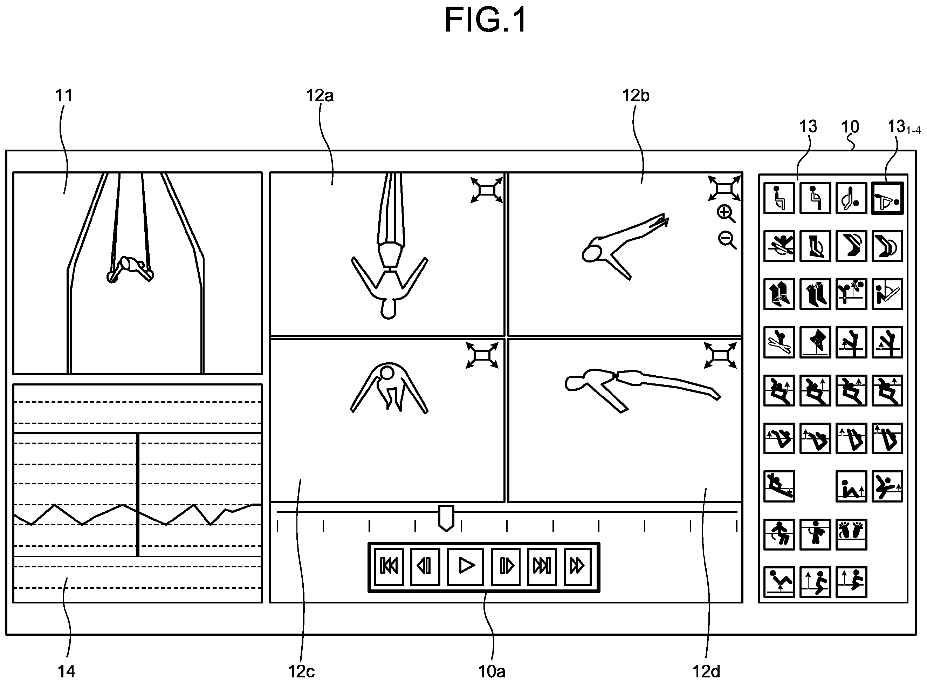

FIG. 1 is a diagram for explaining the reference art. An information processing apparatus of the reference art generates information about a display screen on which a video relating to a competitor and 3D model videos are displayed, and displays a display screen 10. As illustrated in FIG. 1, this display screen 10 has areas 10a, 11, 12a to 12d, and 13.

The area 10a is an area including buttons for controlling the playback, stop, frame advance, fast forward, rewind, and the like of the video and the 3D model videos. A jury controls, by pressing the respective buttons of the area 10a, the playback, stop, frame advance, fast forward, rewind, and the like of the video and the 3D model videos.

The area 11 is an area to display the video based on video data. The video displayed in the area 11 is played back, stopped, frame advanced, fast forwarded, rewound, or the like in accordance with the button pressed in the area 10a.

The areas 12a, 12b, 12c, and 12d are areas to display respective 3D model videos from different virtual viewpoint directions. The 3D model videos displayed in the areas 12a, 12b, 12c, and 12d are played back, stopped, frame advanced, fast forwarded, rewound, or the like in accordance with the button pressed in the area 10a.

The area 13 is an area to display all icons of respective evaluation indexes related to all elements of all events. The evaluation index is an index to determine the score of an element, and the score gets worse as the evaluation index deviates more from an ideal value. The evaluation indexes include an angle formed by a straight line passing through a plurality of joints of a competitor and another straight line passing through a plurality of joints (joint angle), a distance between a straight line and another straight line, an angle formed by a reference line (reference plane) and a straight line, or the like. As one example, the evaluation indexes include a knee angle, an elbow angle, a distance between knees, a distance between a joint position of the competitor and the perpendicular line, and the like.

The jury selects, out of a plurality of icons displayed in the area 13, any one of the icons. The information processing apparatus, when the icon is selected, displays in the areas 12a to 12d auxiliary information about the evaluation index corresponding to the selected icon. The auxiliary information indicates at least one of a numerical value and a graphic corresponding to the evaluation index. For example, the auxiliary information corresponding to the elbow angle that is one of the evaluation indexes is a numerical value of the elbow angle and a graphic illustrating the elbow angle.

The jury refers to the auxiliary information, and determines the deduction of points in the E-score, or the recognition, non-recognition, and the like of the element concerning the D-score. The jury makes the deduction greater as the elbow angle deviates more from an ideal elbow angle. The jury determines that, when the difference between the elbow angle and the ideal elbow angle is greater than a predetermined angle, the element is not recognized.

The area 14 is an area to display the time course of a joint position of the competitor, the time course of an angle formed by a straight line and another straight line, or the like.

When scoring the score of an element, the evaluation index to focus on differs depending on the type of element. However, in the above-described reference art, because all the icons are displayed in the area 13 regardless of the type of element, it can be said that the options of the jury are many. That is, there is a problem in that the jury takes time for the work of checking all the icons displayed in the area 13 and selecting the icon for displaying the evaluation index to be the basis for scoring.

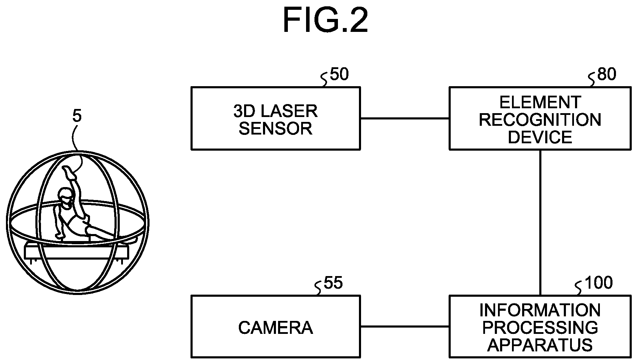

Next, an embodiment concerning the present invention will be described. FIG. 2 is a diagram illustrating a configuration of a system according to the present embodiment. As illustrated in FIG. 2, this system includes a three-dimensional (3D) laser sensor 50, a camera 55, an element recognition device 80, and an information processing apparatus 100. As one example, a case where a competitor 5 performs gymnastic exercises in front of the 3D laser sensor 50 and the camera 55 will be described. However, it can also be applied in the same manner to the case where the competitor 5 performs in other scoring competitions.

Examples of the other scoring competitions include trampoline, fancy diving, figure skating, kata in karate, ballroom dancing, snowboarding, skateboarding, aerial skiing, and surfing. It may also be applied to checking the form and the like in classical ballet, ski-jumping, mogul's air, turn, baseball, and basketball. It may also be applied to competitions such as kendo, judo, wrestling, and sumo.

The 3D laser sensor 50 is a sensor that performs 3D sensing on the competitor 5. The 3D laser sensor 50 outputs, to the element recognition device 80, 3D sensing data that is a sensing result. In the following description, the 3D sensing data is described simply as "sensing data". The sensing data of each frame acquired by the 3D laser sensor 50 includes a frame number, and distance information up to each point on the competitor 5. In each frame, the frame number is given in ascending order. The 3D laser sensor 50 may output the sensing data of each frame to the element recognition device 80 in sequence, or may output the sensing data for a plurality of frames to the element recognition device 80 regularly.

The camera 55 is a device that captures video data of the competitor 5. The camera 55 outputs the video data to the information processing apparatus 100. The video data includes a plurality of frames equivalent to an image of the competitor 5, and in each frame, a frame number is allocated. It is assumed that the frame number of the video data and the frame number of the sensing data are synchronous. In the following description, as appropriate, the frame included in the sensing data is described as "sensing frame" and the frame of the video data is described as "video frame".

The element recognition device 80 generates 3D model data based on the sensing data that the 3D laser sensor 50 has sensed. The element recognition device 80 recognizes, based on the 3D model data, the event and elements that the competitor 5 has performed. The element recognition device 80 outputs the 3D model data and recognition result data to the information processing apparatus 100. The recognition result data includes the frame number, and the recognized event and type of element.

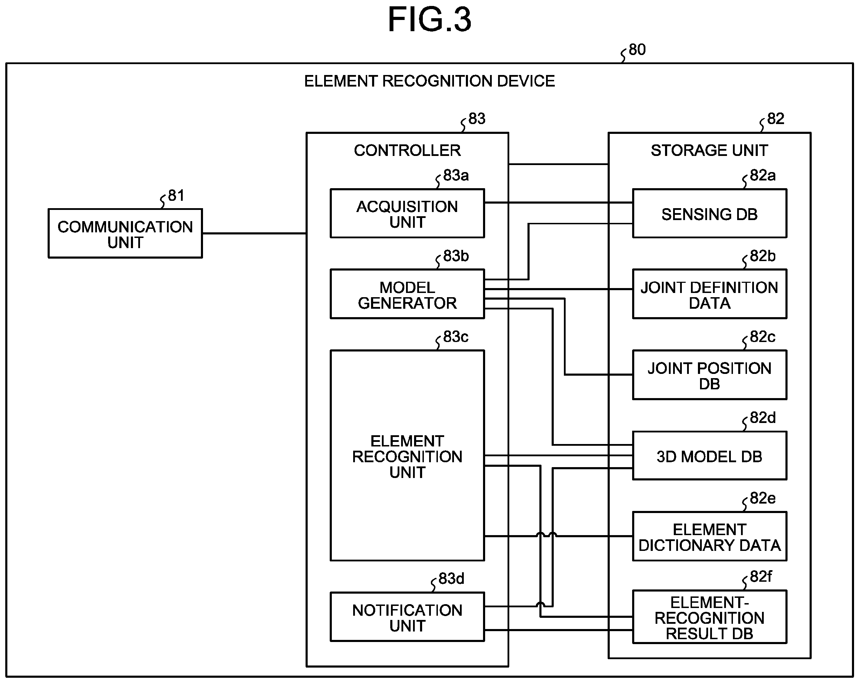

FIG. 3 is a functional block diagram illustrating a configuration of the element recognition device in the present embodiment. As illustrated in FIG. 3, this element recognition device 80 includes a communication unit 81, a storage unit 82, and a controller 83.

The communication unit 81 is a processing unit that performs data communication with the 3D laser sensor 50 and with the information processing apparatus 100. The communication unit 81 corresponds to a communication device.

The storage unit 82 includes a sensing DB 82a, joint definition data 82b, a joint position DB 82c, a 3D model DB 82d, element dictionary data 82e, and an element-recognition result DB 82f. The storage unit 82 corresponds to a semiconductor memory device such as a random-access memory (RAM), a read only memory (ROM), and a flash memory, or to a storage device such as a hard disk drive (HDD).

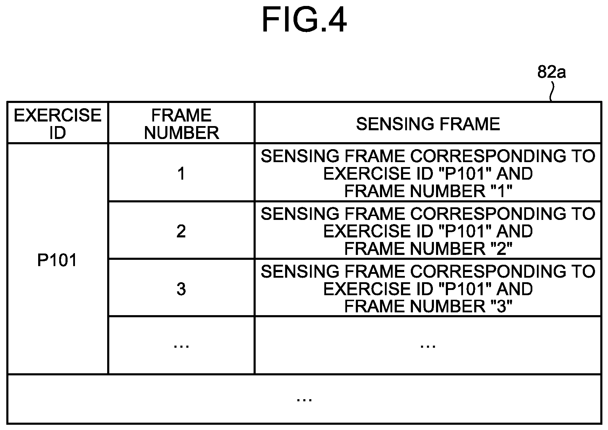

The sensing DB 82a is a DB that stores therein the sensing data acquired from the 3D laser sensor 50. FIG. 4 is a diagram illustrating one example of a data structure of the sensing DB in the present embodiment. As illustrated in FIG. 4, this sensing DB 82a associates an exercise ID with a frame number and a frame. The exercise ID (identification) is information to uniquely identify one exercise that the competitor 5 has performed. The frame number is a number that uniquely identifies each sensing frame corresponding to the same exercise ID. The sensing frame is a frame included in the sensing data sensed by the 3D laser sensor 50.

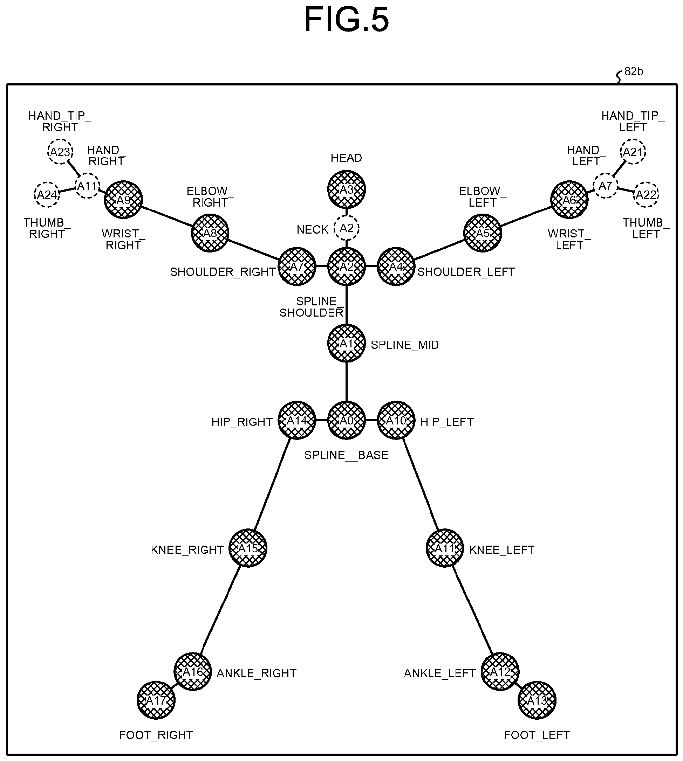

The joint definition data 82b is data that defines each joint position of the competitor 5. FIG. 5 is a diagram illustrating one example of a data structure of the joint definition data in the present embodiment. As illustrated in FIG. 5, the joint definition data 82b stores therein information for which each joint specified by a known skeleton model is numbered. For example, as illustrated in FIG. 5, A7 is given to the right shoulder joint (SHOULDER_RIGHT), A5 is given to the left elbow joint (ELBOW_LEFT), A11 is given to the left knee joint (KNEE_LEFT), and A14 is given to the right hip joint (HIP_RIGHT). In the present embodiment, the X-coordinate of the right shoulder joint of A8 may be described as X8, the Y-coordinate thereof may be described as Y8, and the Z-coordinate thereof may be described as Z8. The numbers in broken lines represent joints or the like that are not used for scoring even though identified from the skeleton model.

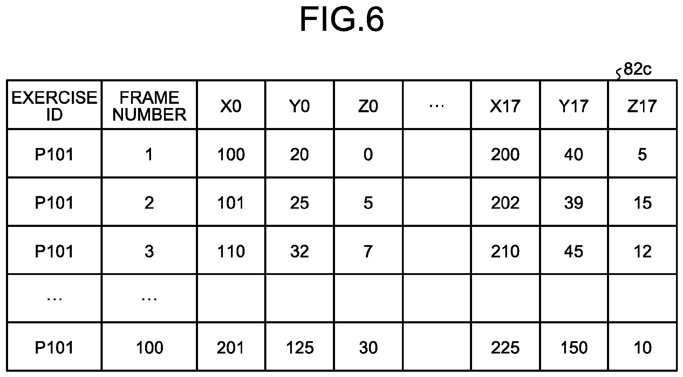

The joint position DB 82c is a database of positional data of each joint of the competitor 5 generated based on the sensing data of the 3D laser sensor 50. FIG. 6 is a diagram illustrating one example of a data structure of the joint position DB in the present embodiment. As illustrated in FIG. 6, this joint position DB 82c associates the exercise ID with the frame number and "X0, Y0, Z0, ..., X17, Y17, Z17". The description concerning the exercise ID is the same as that described for the sensing DB 82a.

In FIG. 6, the frame number is a number that uniquely identifies each sensing frame corresponding to the same exercise ID. "X0, Y0, Z0, ..., X17, Y17, Z17" are XYZ coordinates of each joint, and "X0, Y0, Z0" are three-dimensional coordinates of the joint of A0 illustrated in FIG. 6, for example.

FIG. 6 illustrates changes in the time series of each joint in the sensing data of the exercise ID "P101" and, at the frame number "1", indicates the positions of the respective joints are at "X0=100, Y0=20, Z0=0, ..., X17=200, Y17=40, Z17=5". Then, at the frame number "2", it indicates that the positions of the respective joints moved to "X0=101, Y0=25, Z0=5, ..., X17=202, Y17=39, Z17=15".

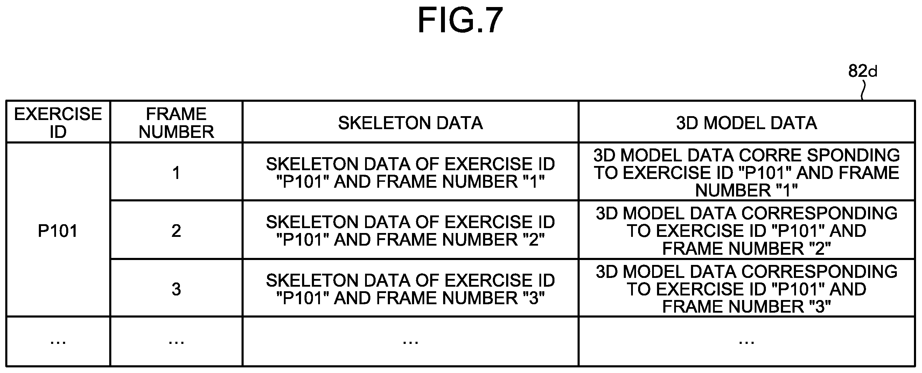

The 3D model DB 82d is a database storing therein data of the 3D model of the competitor 5 generated based on the sensing data. FIG. 7 is a diagram illustrating one example of a data structure of the 3D model DB in the present embodiment. As illustrated in FIG. 7, the 3D model DB 82d associates the exercise ID with the frame number, skeleton data, and the 3D model data. The descriptions concerning the exercise ID and the frame number are the same as those described for the sensing DB 82a.

The skeleton data is data indicating the body framework of the competitor 5 estimated by connecting the respective joint positions. The 3D model data is data of 3D model of the competitor 5 that is estimated based on the information obtained from the sensing data and on the skeleton data.

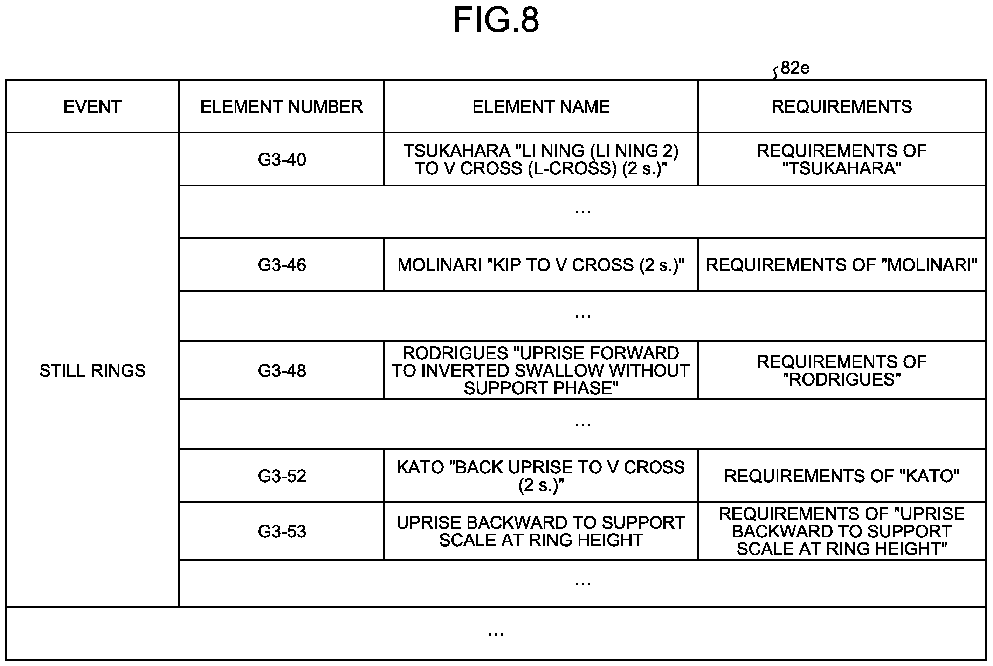

The element dictionary data 82e is dictionary data used in recognizing elements included in the exercise that the competitor 5 performs. FIG. 8 is a diagram illustrating one example of a data structure of the element dictionary data 82e in the present embodiment. As illustrated in FIG. 8, this element dictionary data 82e associates an event with an element number, an element name, and requirements. The event indicates an event of the exercise. The element number is information that uniquely identifies the element. The element name is a name of the element. The requirements indicate the condition by which the element is recognized. The requirements include each joint position, each joint angle, transition of each joint position, transition of each joint angle, and the like for the recognition of the relevant element.

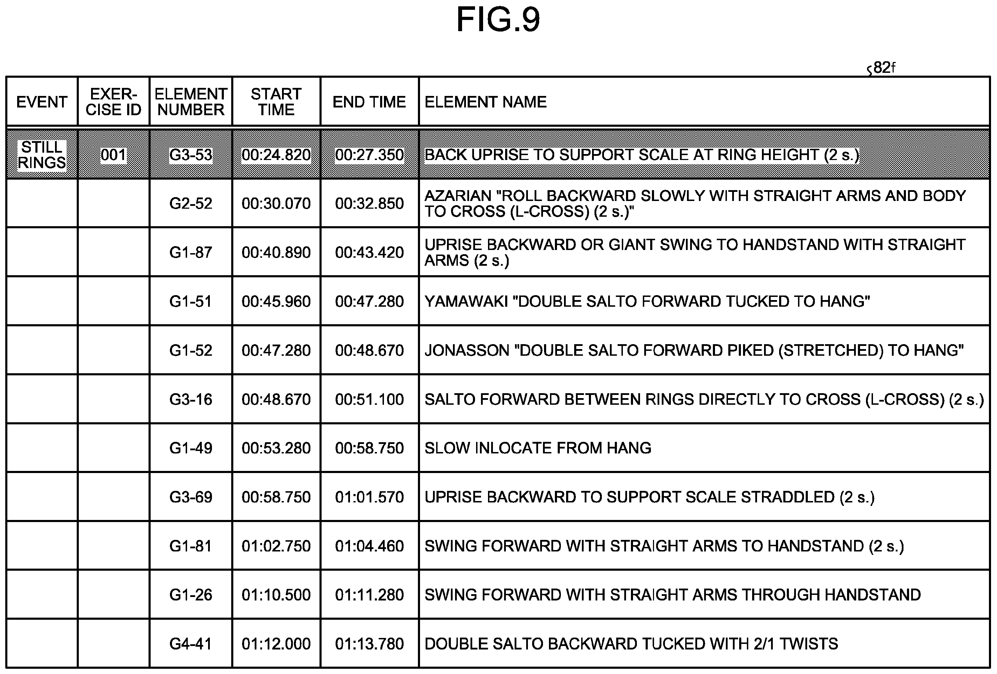

The element-recognition result DB 82f is a database storing therein the recognition result of the element. FIG. 9 is a diagram illustrating one example of a data structure of the element-recognition result DB in the present embodiment. As illustrated in FIG. 9, this element-recognition result DB 82f associates the event with the exercise ID, the element number, start time, end time, and the element name. The descriptions concerning the event, the element number, and element name are the same as those described for the element dictionary data 82e. The exercise ID is information that uniquely identifies the exercise. The start time indicates the start time of each element. The end time indicates the end time of each element. In this case, "time" is one example of time information. For example, the time information may be information including date and time, or may be information indicating an elapsed time from the exercise start. In the example illustrated in FIG. 9, the order of elements that the performer has carried out in a series of exercise is "G3-53, G2-52, G1-87, G1-51, G1-52, G3-16, G1-49, G3-69, G1-81, G1-26, G4-41".

The description returns to FIG. 3. The controller 83 includes an acquisition unit 83a, a model generator 83b, an element recognition unit 83c, and a notification unit 83d. The controller 83 can be implemented with a central processing unit (CPU), a micro processing unit (MPU), or the like. The controller 83 can also be implemented with a hard-wired logic such as an application-specific integrated circuit (ASIC) and a field-programmable gate array (FPGA).

The acquisition unit 83a is a processing unit that acquires the sensing data from the 3D laser sensor 50. The acquisition unit 83a stores the acquired sensing data by 3D laser sensor 50 into the sensing DB 82a.

The model generator 83b is a processing unit that generates, based on the sensing DB 82a, the 3D model data corresponding to each frame number of each exercise ID. In the following, one example of the processing of the model generator 83b will be described. The model generator 83b compares the sensing frame of the sensing DB 82a with the positional relation of each joint defined in the joint definition data 82b, and identifies the type of each joint included in the sensing frame, and the three-dimensional coordinates of the joint. The model generator 83b generates the joint position DB 82c, by repeatedly performing the above-described processing for each frame number of each exercise ID.

The model generator 83b generates the skeleton data, by joining together three-dimensional coordinates of each joint stored in the joint position DB 82c based on the connection relation defined in the joint definition data 82b. The model generator 83b further generates the 3D model data, by applying the estimated skeleton data to a skeleton model tailored to the physique of the competitor 5. The model generator 83b generates the 3D model DB 82d, by repeatedly performing the above-described processing for each frame number of each exercise ID.

The element recognition unit 83c traces each skeleton data stored in the 3D model DB 82d in order of frame number, and compares each skeleton data with the requirements stored in the element dictionary data 82e, thereby recognizing whether the skeleton data matches with the requirements. When certain requirements have matched, the element recognition unit 83c identifies the event, the element number, and the element name corresponding to the requirements that have matched. Furthermore, the element recognition unit 83c converts, based on predetermined frames per second (FPS), the start frame number of a series of frame numbers that have matched with the requirements into the start time, and converts the end frame of the series of frame numbers into the end time. The element recognition unit 83c associates the event with the exercise ID, the element number, the start time, the end time, and the element name, and stores them in the element-recognition result DB 82f.

The notification unit 83d is a processing unit that transmits, to the information processing apparatus 100, the information stored in the 3D model DB 82d and the information stored in the element-recognition result DB 82f.

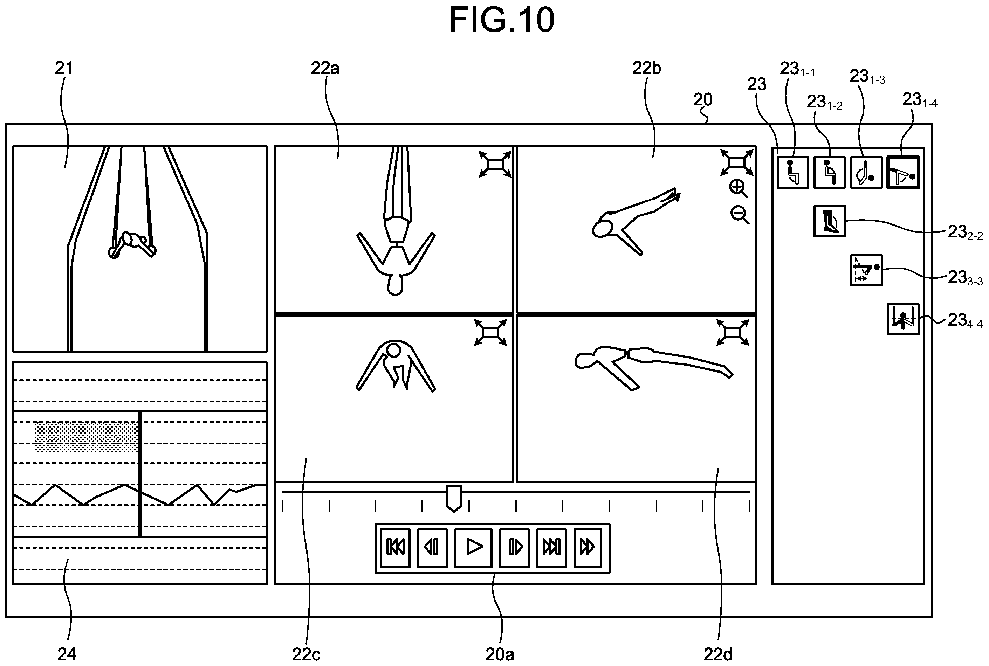

The description returns to FIG. 2. The information processing apparatus 100 is a processing unit that generates information about a display screen on which the video and the 3D model videos are displayed, and displays it on a display unit (depiction omitted). FIG. 10 is a diagram illustrating one example of the display screen generated by the information processing apparatus in the present embodiment. As illustrated in FIG. 10, this display screen 20 has areas 20a, 21, 22a to 22d, and 23.

The area 20a is an area including buttons for controlling the playback, stop, frame advance, fast forward, rewind, and the like of the video and the 3D model videos. The jury controls, by pressing the respective buttons of the area 20a, the playback, stop, frame advance, fast forward, rewind, and the like of the video and the 3D model videos.

The area 21 is an area to display the video based on the video data. The video displayed in the area 21 is played back, stopped, frame advanced, fast forwarded, rewound, or the like in accordance with the button pressed in the area 20a.

The areas 22a, 22b, 22c, and 22d are areas to display respective 3D model videos from different viewpoint directions. The 3D model videos displayed in the areas 22a, 22b, 22c, and 22d are played back, stopped, frame advanced, fast forwarded, rewound, or the like in accordance with the button pressed in the area 20a.

The area 24 is an area to display the time course of a joint position of the competitor 5, the time course of an angle formed by a straight line and another straight line, or the like. In the area 24, from the playback time (bold line in the area 24), a predetermined time (for example, two seconds) may be highlighted.

The area 23 is an area to display, out of all icons of respective evaluation indexes related to all elements of all events, a part of the icons corresponding to the element being played back (or displayed by a pause or the like). The evaluation index is an index to determine the score of an element, and the score gets worse as the evaluation index deviates more from an ideal value. The evaluation indexes include an angle formed by a straight line passing through a plurality of joints of the competitor 5 and another straight line passing through a plurality of straight lines, a distance between a straight line and another straight line, an angle formed by a reference line (reference plane) and a straight line, or the like. As one example, the evaluation indexes include a knee angle, an elbow angle, a distance between knees, a distance between a joint position of the competitor and the perpendicular line, and the like.

Each icon corresponds to an option that selects, out of a plurality of evaluation indexes associated with each icon, any one of the evaluation indexes.

The information processing apparatus 100 identifies the playback time of the 3D model videos currently displayed in the areas 22a to 22d, and compares the playback time with the information about the element-recognition result DB 82f, thereby identifying the element corresponding to the playback time. The information processing apparatus 100 displays in the area 23, out of all the icons that can be displayed in the area 23, a part of the icons corresponding to the identified element.

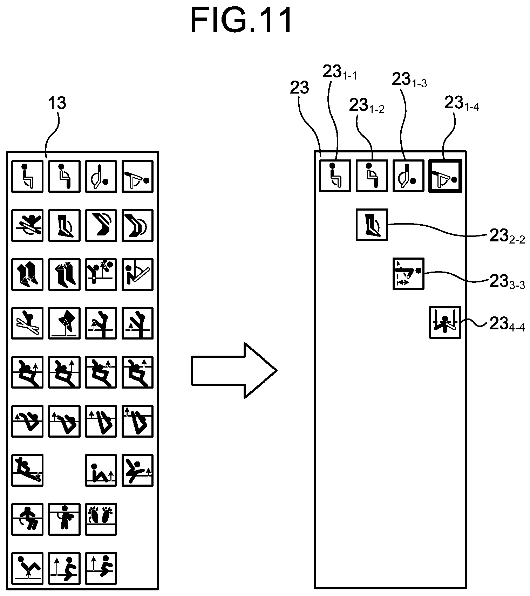

FIG. 11 is a diagram illustrating one example of a comparison result of the display screens. As illustrated in FIG. 11, in the area 13 of the display screen in the reference art, all the icons of respective evaluation indexes related to all elements of all events are displayed. Meanwhile, in the area 23 of the display screen concerning the present embodiment, at the playback time, only icons to select the evaluation indexes concerning the element that the competitor 5 is performing are displayed.

For example, it is assumed that the icons corresponding to the evaluation indexes of the element "Uprise backward to support scale at ring height (2 s.)" are icons 23₁₋₁, 23₁₋₂, 23₁₋₃, 23₁₋₄, 23₂₋₂, 23₃₋₃, and 23₄₋₄. In this case, when the element at the playback time is "Uprise backward to support scale at ring height (2 s.)", the information processing apparatus 100 displays, out of all the icons, the icons 23₁₋₁, 23₁₋₂, 23₁₋₃, 23₁₋₄, 23₂₋₂, 23₃₋₃, and 23₄₋₄ in a mode that can be received. As illustrated in FIG. 10 and FIG. 11, the respective icons displayed in the area 23 are only the icons for displaying the evaluation indexes to focus on in scoring the score of the element being played back in the areas 22a to 22d. This eliminates the time needed for the work of selecting the icons for displaying the evaluation items to be the basis for scoring, and thus the work of the jury is improved.

The jury selects, out of a plurality of icons displayed in the area 23, any one of the icons. The information processing apparatus 100, when the icon is selected, displays in the areas 22a to 22d auxiliary information about the evaluation index corresponding to the selected icon. The auxiliary information indicates a numerical value and a graphic corresponding to the evaluation index. For example, the auxiliary information corresponding to the elbow angle that is one of the evaluation indexes is a numerical value of the elbow angle and a graphic illustrating the elbow angle. A case where the icon 23₁₋₄ is selected will be described. The icon 23₁₋₄ is an icon that indicates the elbow angle.

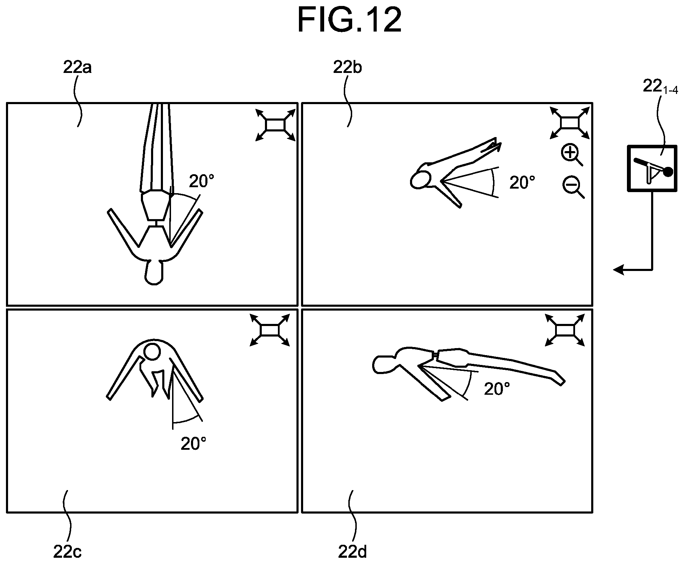

FIG. 12 is a diagram illustrating one example of the 3D model videos in a case where an icon has been selected. As illustrated in FIG. 12, when the icon 23₁₋₄ is selected, in the area 22a to the area 22d, the information processing apparatus 100 displays the 3D model from different viewpoint angles, and displays together, as the auxiliary information corresponding to the selected icon "elbow angle (evaluation index)", the numerical value of the elbow angle and the graphics indicating the relevant angle. The jury refers to the auxiliary information, and determines the deduction of points in the E-score, or the recognition, non-recognition, and the like of the element concerning the D-score. The jury makes the deduction greater as the elbow angle deviates more from an ideal elbow angle. The jury determines that, when the difference between the elbow angle and the ideal elbow angle is greater than a predetermined angle, the element is not recognized.

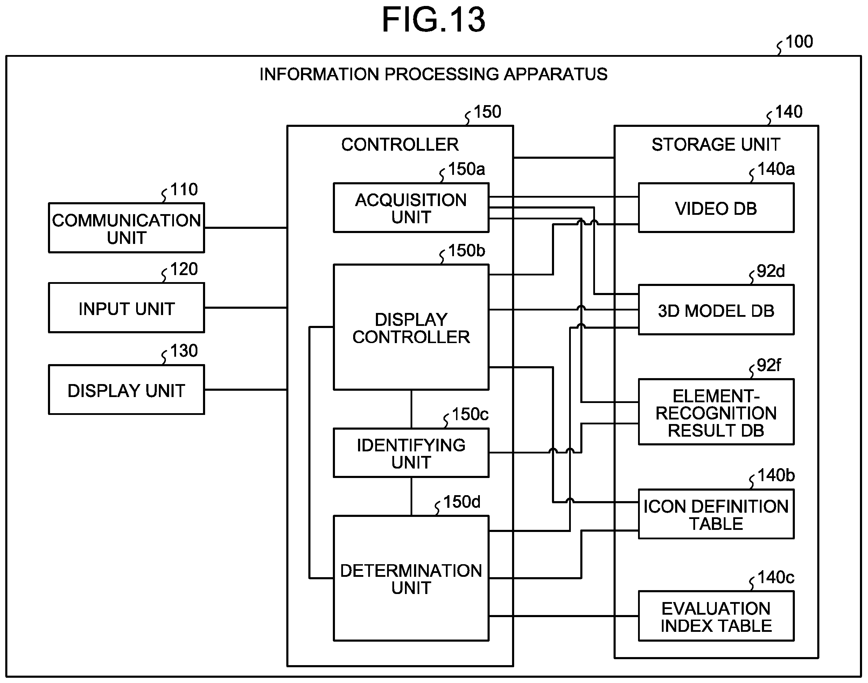

Next, the configuration of the information processing apparatus 100 in the present embodiment will be described. FIG. 13 is a diagram illustrating the configuration of the information processing apparatus in the present embodiment. As illustrated in FIG. 13, the information processing apparatus 100 includes a communication unit 110, an input unit 120, a display unit 130, a storage unit 140, and a controller 150.

The communication unit 110 is a processing unit that performs data communication with the camera 55 and with the element recognition device 80. For example, the communication unit 110 receives from the element recognition device 80 the information about the 3D model DB 82d and the information about the element-recognition result DB 82f, and outputs to the controller 150 the received information about the 3D model DB 82d and the received information about the element-recognition result DB 82f. Furthermore, the communication unit 110 receives the video data from the camera 55 and outputs the received video data to the controller 150. The controller 150 described later exchanges data with the camera 55 and the element recognition device 80 via the communication unit 110.

The input unit 120 is an input device for inputting various information to the information processing apparatus 100. For example, the input unit 120 corresponds to a keyboard, a mouse, a touch panel, and the like. The jury operates the input unit 120 and selects the buttons in the area 20a of the display screen 20 illustrated in FIG. 10 and others, thereby controlling the playback, stop, frame advance, fast forward, rewind, and the like of the 3D model videos. Furthermore, by operating the input unit 120, the jury selects the icons included in the area 23 of the display screen 20 illustrated in FIG. 10.

The display unit 130 is a display device that displays various information output from the controller 150. For example, the display unit 130 displays the information about the display screen 20 illustrated in FIG. 10 and others. When the jury presses the icon included in the area 23, in the display unit 130, as illustrated in FIG. 12, the auxiliary information about the evaluation index corresponding to the selected icon is displayed in a superimposed manner on the 3D model.

The storage unit 140 includes a video DB 140a, a 3D model DB 92d, an element-recognition result DB 92f, an icon definition table 140b, and an evaluation index table 140c. The storage unit 140 corresponds to a semiconductor memory device such as a RAM, a ROM, and a flash memory, or to a storage device such as an HDD.

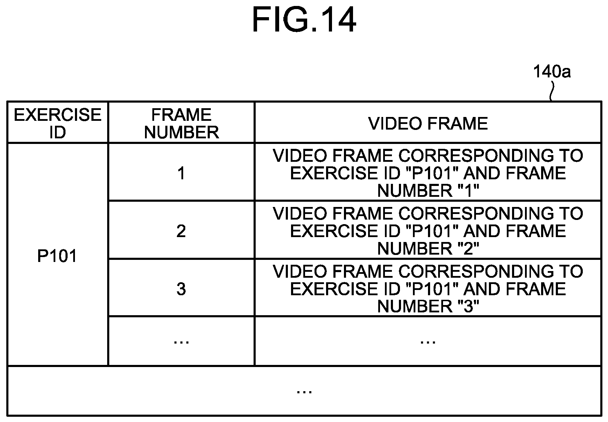

The video DB 140a is a database storing therein the video frames. FIG. 14 is a diagram illustrating one example of a data structure of the video DB in the present embodiment. As illustrated in FIG. 14, this video DB 140a associates the exercise ID with the frame number and the video frame. The exercise ID is information that uniquely identifies one exercise that the competitor 5 has performed. The frame number is a number that uniquely identifies each video frame corresponding to the same exercise ID. The video frame is a frame included in the video data captured by the camera 55. It is assumed that the frame number of the sensing frame illustrated in FIG. 4 and the frame number of the video frame are synchronous.

The 3D model DB 92d is a database storing therein data of the 3D model of the competitor 5 generated by the element recognition device 80. In the 3D model DB 92d, the information the same as that of the 3D model DB 82d described with FIG. 7 is stored.

The element-recognition result DB 92f is a database storing therein the recognition result of each element included in a series of exercise generated by the element recognition device 80. In the element-recognition result DB 92f, the information the same as that of the element-recognition result DB 82f described with FIG. 9 is stored.

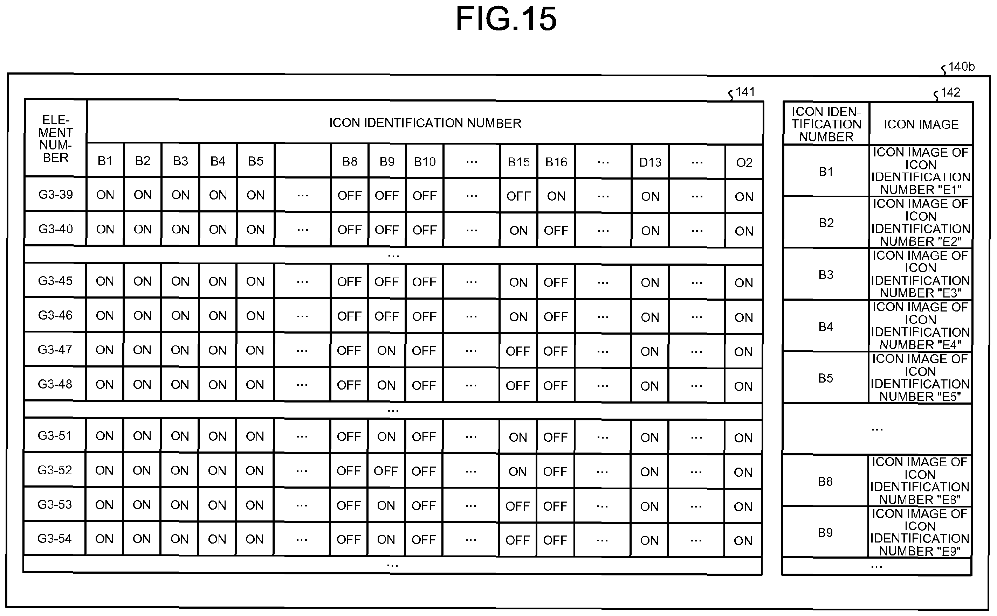

The icon definition table 140b is a table that defines icons corresponding to the event and the element of the exercise. By this icon definition table 140b, for the element of the competitor 5 at the playback time, which icon is displayed in the area 23 is determined. FIG. 15 is a diagram illustrating one example of a data structure of the icon definition table. As illustrated in FIG. 15, this icon definition table 140b includes tables 141 and 142.

The table 141 is a table that defines an icon identification number corresponding to the element number. The element number is information that uniquely identifies an element. The icon identification number is information that uniquely identifies an icon. When the icon identification number corresponds to the element number, a portion at which the row of the element number and the column of the icon identification number intersect is "On". When the icon identification number does not correspond to the element number, a portion at which the row of the element number and the column of the icon identification number intersect is "Off". For example, it is assumed that the element of the competitor at the playback time is the element of the element number "G3-39". In this case, at the row of the element number "G3-39" of the table 141, the icons for which the icon identification number is On are displayed in the area 23.

The table 142 is a table that associates the icon identification number with an icon image. The icon identification number is information that uniquely identifies the icon. The icon image indicates an image of each icon illustrated in FIG. 11 or of each icon illustrated in the area 23 of FIGS. 10 and 11.

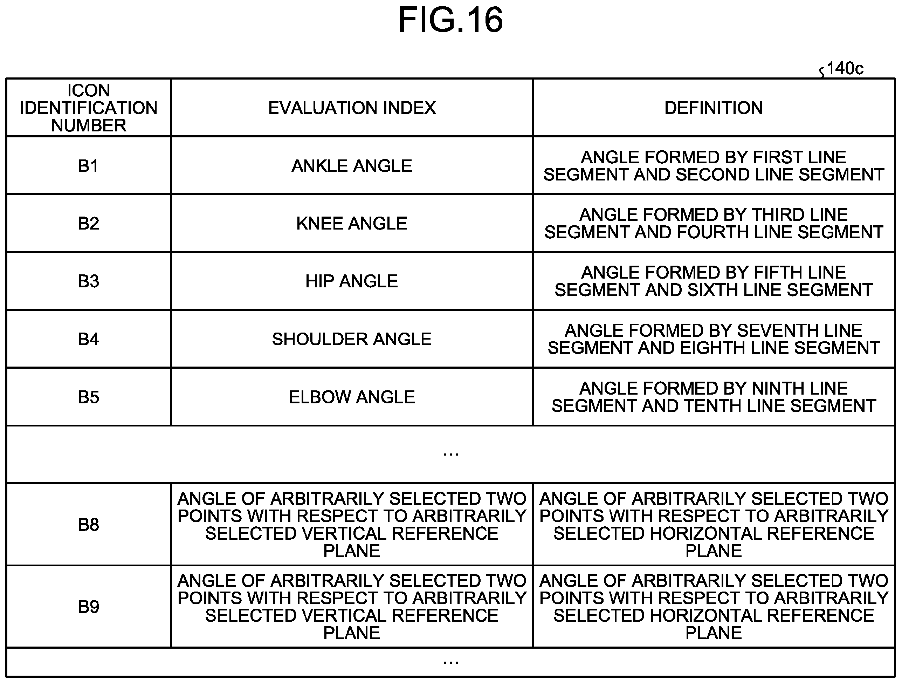

The evaluation index table 140c is a table that defines how, on the evaluation index corresponding to the icon, the auxiliary information corresponding to the evaluation index is identified. FIG. 16 is a diagram illustrating one example of a data structure of the evaluation index table. As illustrated in FIG. 16, this evaluation index table 140c associates the icon identification number with the evaluation index and the definition.

The icon identification number is information that uniquely identifies the icon. The evaluation index is an index for determining the score of an element. The definition indicates the definition for deriving the evaluation index of the competitor 5 from the skeleton data. For example, the evaluation index is defined by, out of a plurality of joints included in the skeleton data, a straight line connecting one joint and one joint, an angle formed by two straight lines, or the like.

The description returns to FIG. 13. The controller 150 includes an acquisition unit 150a, a display controller 150b, an identifying unit 150c, and a determination unit 150d. The controller 150 can also be implemented with a hard-wired logic such as an ASIC and an FPGA.

The acquisition unit 150a acquires the video data from the camera 55, and stores the acquired video data into the video DB 140a. The acquisition unit 150a acquires from the element recognition device 80 the information about the 3D model DB 82d and the information about the element-recognition result DB 82f. The acquisition unit 150a stores the information about the 3D model DB 82d into the 3D model DB 92d. The acquisition unit 150a stores the information about the element-recognition result DB 82f into the element-recognition result DB 92f.

The display controller 150b is a processing unit that generates the information about the display screen 20 illustrated in FIG. 10 and displays it on the display unit 130. The display controller 150b reads out the video frames in sequence from the video DB 140a, and plays back the video in the area 21 of the display screen 20.

The display controller 150b reads out the 3D model data in sequence from the 3D model DB 82d, and plays back the 3D model videos in the areas 22a to 22d of the display screen 20. Each of the 3D model videos displayed in the respective areas 22a to 22d is the video for which the 3D model data was captured from a predetermined virtual viewpoint direction.

The display controller 150b performs the playback by synchronizing the time (frame number) of the video displayed in the area 21 with the time (frame number) of each 3D model video displayed in the respective areas 22a to 22d. The display controller 150b, when the buttons displayed in the area 20a are pressed down by the jury, performs the playback, stop, frame advance, fast forward, rewind, and the like on the video in the area 21 and the 3D model videos in the areas 22a to 22d, in accordance with the pressed button.

The display controller 150b refers to the skeleton data stored in the 3D model DB 92d, generates information about the time course of a joint position of the competitor 5, the time course of an angle formed by a straight line and another straight line, or the like, and displays it in the area 24.

The display controller 150b outputs to the identifying unit 150c the information about the playback time of the 3D model videos currently displayed in the areas 22a to 22d. In the following description, the playback time of the 3D model videos currently displayed in the areas 22a to 22d is described simply as "playback time".

The display controller 150b receives, at the timing of switching the elements of the competitor 5, icon information from the determination unit 150d. The icon information is information that associates a plurality of pieces of icon identification information with a plurality of pieces of auxiliary information about the evaluation index corresponding to the icon identification information. The display controller 150b acquires from the icon definition table 140b a plurality of icon images of the icon identification information included in the icon information last received from the determination unit 150d. Then, the display controller 150b displays the respective icon images corresponding to the icon identification information in the area 23 of the display screen 20.

The display controller 150b, when any icon out of a plurality of icons (icon images) displayed in the area 23 of the display screen 20 is selected by the jury, acquires, based on the icon identification information about the selected icon, the auxiliary information about the evaluation index corresponding to the icon identification information from the icon information last received. The display controller 150b displays in a superimposed manner the auxiliary information corresponding to the selected icon on the 3D model videos displayed in the areas 22a to 22d.

The display controller 150b may, when displaying the auxiliary information on the 3D model videos in a superimposed manner, highlight a portion relevant to supplemental information about the selected evaluation index. For example, when the icon of "elbow angle" is selected as the evaluation index, as described with FIG. 12, the value of the elbow angle and graphics indicating the relevant elbow angle (fan-shaped graphics representing the magnitude of the angle) are generated. Then, on the 3D model videos, the graphics indicating the elbow angle are highlighted by superimposing the graphics in a color different from that of the 3D model. In regard to which portion to highlight in the 3D model videos, a table (depiction omitted) in which the icon identification information is associated with the highlight portion can be used, for example. Alternatively, the display controller 150b may calculate a portion to highlight based on the information included in the definition of the evaluation index table 140c in FIG. 16. For example, when the icon identification number is "B1", the display controller 150b highlights a portion between a first line segment and a second line segment in the 3D model videos.

The identifying unit 150c is a processing unit that acquires information about the playback time from the display controller 150b, compares the playback time with the element-recognition result DB 82f, and identifies the element number corresponding to the playback time. The identifying unit 150c outputs to the determination unit 150d the identified element number corresponding to the playback time. When in a pause, the identifying unit 150c identifies the element number based on the time at which the pause was made (time being displayed).

The determination unit 150d is a processing unit that acquires from the identifying unit 150c the element number corresponding to the playback time and determines the icon identification number corresponding to the element number. The determination unit 150d compares the element number with the table 141, determines the associated icon identification number for which the relation between the element number and the icon identification number is "On", and registers the determined icon identification number to the icon information.

Furthermore, the determination unit 150d generates the auxiliary information about the evaluation index based on the icon identification number. The determination unit 150d compares the icon identification number with the evaluation index table 140c and determines the evaluation index and the definition corresponding to the icon identification number. The determination unit 150d further acquires from the 3D model DB 92d the skeleton data of the frame number corresponding to the playback time. The determination unit 150d identifies a plurality of lines identified by the definition based on the skeleton data, and calculates the angle formed by the identified line segments, a reference plane, a distance to a reference line, and the like as the auxiliary information. The determination unit 150d registers the calculated auxiliary information to the icon information.

By performing the above-described processing, each time the element number is acquired, the determination unit 150d registers the icon identification number and the auxiliary information to the icon information, and outputs the icon information to the display controller 150b.

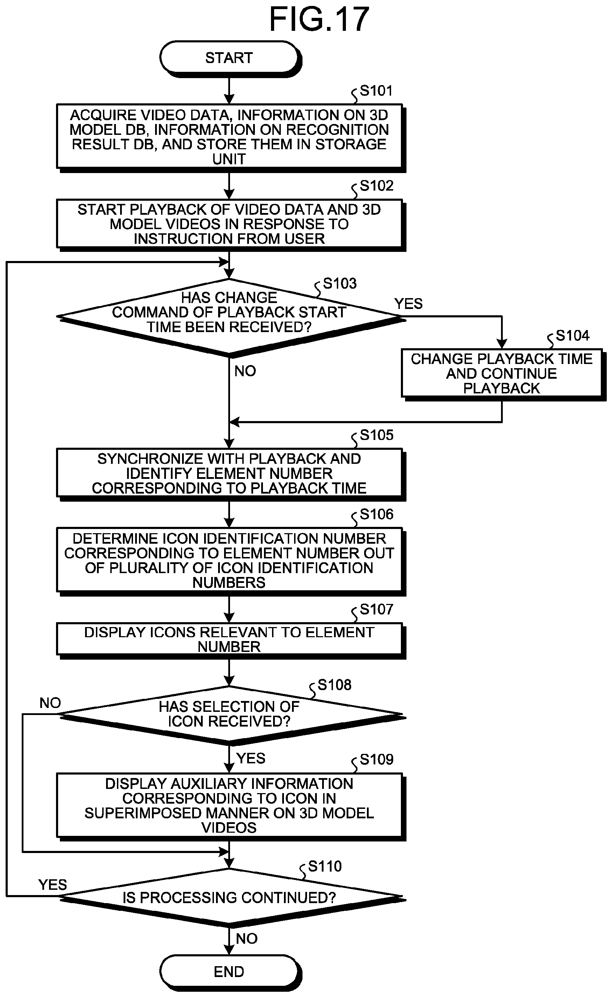

Next, one example of a processing procedure of the information processing apparatus 100 in the present embodiment will be described. FIG. 17 is a flowchart illustrating the processing procedure of the information processing apparatus in the present embodiment. As illustrated in FIG. 17, the acquisition unit 150a of the information processing apparatus 100 acquires the video data, the information about the 3D model DB 82d, and the information about the element-recognition result DB 82f, and stores them in the storage unit 140 (Step S101).

The display controller 150b of the information processing apparatus 100 starts, in response to an instruction from the user, the playback of the video data and the 3D model videos (Step S102). The display controller 150b determines whether a change command of playback start time has been received by the button of the area 20a of the display screen (Step S103).

If a change command of playback start time has not been received (No at Step S103), the display controller 150b moves on to Step S105.

By contrast, if the change command of playback start time has been received (Yes at Step S103), the display controller 150b changes the playback time and continues the playback (Step S104), and moves on to Step S105.

The identifying unit 150c of the information processing apparatus 100 synchronizes with the playback, and identifies the element number corresponding to the playback time (Step S105). The determination unit 150d of the information processing apparatus 100 determines, from a plurality of icon identification numbers, the icon identification number that is the evaluation index corresponding to the element number (Step S106).

The display controller 150b displays, in the area 23 of the display screen 20, icons (icon images) relevant to the element number (Step S107). The display controller 150b determines whether the selection of the icon has been received (Step S108).

If the selection of the icon has not been received (No at Step S108), the display controller 150b moves on to Step S110. By contrast, if the selection of the icon has been received (Yes at Step S108), the display controller 150b displays the supplemental information corresponding to the icon in a superimposed manner on the 3D model videos (Step S109).

If the processing is continued (Yes at Step S110), the display controller 150b moves on to Step S103. By contrast, if the processing is not continued (No at Step S110), the display controller 150b ends the processing.

Next, the effects of the information processing apparatus 100 in the present embodiment will be described. In the area of the display screen 20 that the information processing apparatus 100 displays, at the playback time, only icons for selecting the evaluation indexes relevant to the element that the competitor 5 is performing are displayed.

For example, it is assumed that the icons corresponding to the evaluation indexes of the element "Uprise backward to support scale at ring height (2 s.)" are icons 23₁₋₁, 23₁₋₂, 23₁₋₃, 23₁₋₄, 23₂₋₂, 23₃₋₃, and 23₄₋₄. In this case, when the element at the playback time is "Uprise backward to support scale at ring height (2 s.)", the information processing apparatus 100 displays, out of all the icons, the icons 23₁₋₁, 23₁₋₂, 23₁₋₃, 23₁₋₄, 23₂₋₂, 23₃₋₃, and 23₄₋₄ in a mode that can be received. As illustrated in FIG. 10 and FIG. 11, the respective icons displayed in the area 23 are only the icons for displaying the evaluation indexes of the posture to focus on in scoring the score of the element being played back in the areas 22a to 22d. This eliminates the time needed for the work of selecting the icons for displaying the posture to be the basis for scoring, and thus the work of the jury is improved.

The information processing apparatus 100 identifies the playback time of the 3D model videos being played back and, based on the identified playback time and the element-recognition result DB 82f, identifies the element number. The information processing apparatus 100 further compares the element number with the icon definition table 140b and identifies the icons corresponding to the element number. Because the element number identifies the event and the element that the competitor 5 has performed, it is possible to easily identify the icons relevant to a set of the event and the element.

The information processing apparatus 100 generates, based on the definition of the evaluation index corresponding to the element number and the skeleton data stored in the 3D model DB 82d, the auxiliary information corresponding to the evaluation index. Accordingly, it is possible to generate the auxiliary information corresponding to the evaluation index based on the skeleton data of the competitor 5, and it is possible to assist the scoring of the jury by visual observation.

In the system illustrated in FIG. 2, the case where the element recognition device 80 and the information processing apparatus 100 are implemented in separate devices has been described. However, the embodiments are not limited thereto, and the information processing apparatus 100 may include the functions of the element recognition device 80. For example, the information processing apparatus 100 may include the functions illustrated in the controller 83 of the element recognition device 80 and may, based on the information stored in the storage unit 82, generate the information about the 3D model DB 82d and the information about the element-recognition result DB 82f.

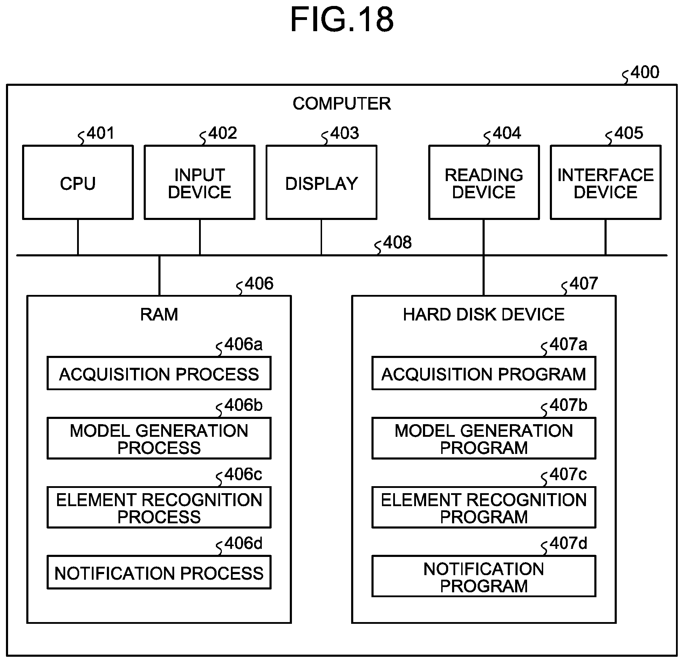

Next, one example of a hardware configuration of a computer that implements the functions the same as those of the element recognition device 80 and those of the information processing apparatus 100 illustrated in the present embodiment will be described. FIG. 18 is a diagram illustrating one example of the hardware configuration of the computer that implements the functions the same as those of the element recognition device in the present embodiment.

As illustrated in FIG. 18, a computer 400 includes a CPU 401 that executes various arithmetic processes, an input device 402 that receives data from the user, and a display 403. The computer 400 further includes a reading device 404 that reads a computer program or the like from a storage medium, and an interface device 405 that exchanges data between the computer 400 and the 3D laser sensor 50 and the like via a wired or wireless network. The computer 400 includes a RAM 406 that temporarily stores therein various types of information, and a hard disk device 407. Then, the various devices 401 to 407 are connected to a bus 408.

The hard disk device 407 includes an acquisition program 407a, a model generation program 407b, an element recognition program 407c, and a notification program 407d. The CPU 401 reads out the acquisition program 407a, the model generation program 407b, the element recognition program 407c, and the notification program 407d, and loads them on the RAM 406.

The acquisition program 407a functions as an acquisition process 406a. The model generation program 407b functions as a model generation process 406b. The element recognition program 407c functions as an element recognition process 406c. The notification program 407d functions as a notification process 406d.

The processing of the acquisition process 406a corresponds to the processing of the acquisition unit 83a. The processing of the model generation process 406b corresponds to the processing of the model generator 83b. The processing of the element recognition process 406c corresponds to the processing of the element recognition unit 83c. The processing of the notification process 406d corresponds to the processing of the notification unit 83d.

The computer programs 407a to 407d are not necessarily stored in the hard disk device 407 from the beginning. For example, the respective computer programs are kept stored in a "transportable physical medium" such as a flexible disk (FD), a CD-ROM, a DVD disk, a magneto-optical disk, and an IC card inserted into the computer 400. The computer 400 may then read out and execute the respective computer programs 407a to 407d.

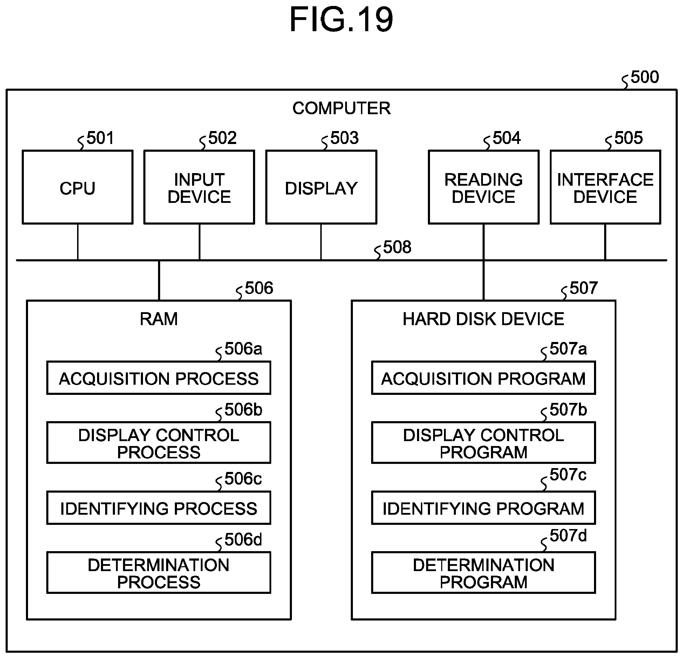

FIG. 19 is a diagram illustrating one example of the hardware configuration of the computer that implements the functions the same as those of the information processing apparatus in the present embodiment.

As illustrated in FIG. 19, a computer 500 includes a CPU 501 that executes various arithmetic processes, an input device 502 that receives data from the user, and a display 503. The computer 500 further includes a reading device 504 that reads a computer program or the like from a storage medium, and an interface device 505 that exchanges data between the computer 400 and the camera 55, the element recognition device 80, and the like via a wired or wireless network. The computer 500 includes a RAM 506 that temporarily stores therein various types of information, and a hard disk device 507. Then, the various devices 501 to 507 are connected to a bus 508.

The hard disk device 507 includes an acquisition program 507a, a display control program 507b, an identifying program 507c, and a determination program 507d. The CPU 501 reads out the acquisition program 507a, the display control program 507b, the identifying program 507c, and the determination program 507d, and loads them on the RAM 506.

The acquisition program 507a functions as an acquisition process 506a. The display control program 507b functions as a display control process 506b. The identifying program 507c functions as an identifying process 506c. The determination program 507d functions as a determination process 506d.

The processing of the acquisition process 506a corresponds to the processing of the acquisition unit 150a. The processing of the display control process 506b corresponds to the processing of the display controller 150b. The processing of the identifying process 506c corresponds to the processing of the identifying unit 150c. The processing of the determination process 506d corresponds to the processing of the determination unit 150d.

The computer programs 507a to 507d are not necessarily stored in the hard disk device 507 from the beginning. For example, the respective computer programs are kept stored in a "transportable physical medium" such as a flexible disk (FD), a CD-ROM, a DVD disk, a magneto-optical disk, and an IC card inserted into the computer 500. The computer 500 may then read out and execute the respective computer programs 507a to 507d.

It is possible to assist the work of selecting, by a user, an evaluation index concerning a scoring reference in a scoring competition.

## Claims

1. A display method performed by a computer (500), the display method comprising:
acquiring a recognition result that includes recognized elements and a start time and an end time of each of the recognized elements wherein the elements are performed in an exercise of a scoring competition performed by a competitor and the recognized elements have been recognized based on skeleton data that is obtained based on 3D coordinates of a joint position of the competitor, the 3D coordinates being obtained based on 3D sensing data that is acquired by sensing the exercise, and element dictionary data in which characteristics of elements performed in the scoring competition are defined, wherein an element is recognized when the skeleton data matches the characteristics of the element, and the element is an object of scoring;
displaying 3D model video that is video of 3D model data that is obtained based on the skeleton data, and identifying an element currently displayed in the 3D model video, based on a playback time of the 3D model video and the start time and the end time of the element included in the recognition result;
determining evaluation indexes related to the element currently displayed, out of a plurality of evaluation indexes that each determine a scoring of an element performed in the scoring competition and include a knee angle, an elbow angle, a distance between knees, and a distance between a joint position of the competitor and a reference line;
displaying the determined evaluation indexes in a mode to be selectable; and
displaying, as auxiliary information, a numerical value and a graphic superimposed on the 3D model video that represent an evaluation index selected out of the displayed evaluation indexes.

2. The display method according to claim 1, further including generating the auxiliary information based on a joint position of the competitor acquired based on the 3D sensing data.

3. The display method according to any of claims 1 or 2, wherein
the identifying comprises identifying an event of the exercise currently displayed, out of a plurality of events in the scoring competition, and
the determining comprises determining, based on a set of the element currently displayed and the identified event, evaluation indexes related to the element currently displayed.

4. A display program which, when executed by a computer (500), causes the computer to carry out the display method according to any of claims 1 to 3.

5. An information processing apparatus (100) comprising:
an acquisition unit (150a) configured to acquire a recognition result that includes recognized elements and a start time and an end time of each of the recognized elements wherein the elements are performed in an exercise of a scoring competition performed by a competitor and the recognized elements have been recognized based on skeleton data that is obtained based on 3D coordinates of a joint position of the competitor, the 3D coordinates being obtained based on 3D sensing data that is acquired by sensing the exercise, and element dictionary data in which characteristics of elements performed in the scoring competition are defined, wherein an element is recognized when the skeleton data matches the characteristics of the element, and the element is an object of scoring;
an identifying unit (150c) configured to display, on a display unit (130), 3D model video that is video of 3D model data that is obtained based on the skeleton data, and identify an element currently displayed in the 3D model video, based on a playback time of the 3D model video and the start time and the end time of the element included in the recognition result;
a determination unit (150d) configured to determine evaluation indexes related to the element currently displayed, out of a plurality of evaluation indexes that each determine a scoring of an element performed in the scoring competition and include a knee angle, an elbow angle, a distance between knees, and a distance between a joint position of the competitor and a reference line; and
a display controller (150b) configured to display the determined evaluation indexes in a mode to be selectable, and display, as auxiliary information, a numerical value and a graphic superimposed on the 3D model video that represent an evaluation index selected out of the displayed evaluation indexes.

6. The information processing apparatus according to claim 5, wherein the determination unit (150d) is configured to generate the auxiliary information based on a joint position of the competitor acquired based on the 3D sensing data.

7. The information processing apparatus according to any of claims 5 or 6, wherein
the identifying unit (150c) is configured to identify an event of the exercise currently displayed, out of a plurality of events in the scoring competition, and
the determination unit (150d) is configured to determine, based on a set of the element currently displayed and the identified event, evaluation indexes related to the element currently displayed.

## Patentansprüche

1. Anzeigeverfahren, das von einem Computer (500) durchgeführt wird, wobei das Anzeigeverfahren Folgendes umfasst:
Erlangen eines Erkennungsergebnisses, das erkannte Elemente und eine Startzeit und eine Endzeit jedes der erkannten Elemente beinhaltet, wobei die Elemente in einer Übung eines Wertungswettkampfs durchgeführt werden, der von einem Wettkämpfer durchgeführt wird, und die erkannten Elemente basierend auf Skelettdaten erkannt wurden, die basierend auf 3D-Koordinaten einer Gelenkposition des Wettkämpfers erhalten werden, wobei die 3D-Koordinaten basierend auf 3D-Erfassungsdaten, die durch Erfassen der Übung erlangt werden, und Elementwörterbuchdaten erhalten werden, in denen Merkmale von in dem Wertungswettkampf durchgeführten Elementen definiert sind, wobei ein Element erkannt wird, wenn die Skelettdaten mit den Merkmalen des Elements übereinstimmen, und das Element ein Wertungsobjekt ist;
Anzeigen eines 3D-Modellvideos, das ein Video von 3D-Modelldaten ist, die basierend auf den Skelettdaten erhalten werden, und Identifizieren eines aktuell in dem 3D-Modellvideo angezeigten Elements basierend auf einer Wiedergabezeit des 3D-Modellvideos und der Startzeit und der Endzeit des in dem Erkennungsergebnis beinhalteten Elements;
Bestimmen von Bewertungsindizes, die das aktuell angezeigte Element betreffen, aus einer Vielzahl von Bewertungsindizes, die jeweils eine Wertung eines in dem Wertungswettkampf durchgeführten Elements bestimmen und einen Kniewinkel, einen Ellbogenwinkel, einen Abstand zwischen Knien und einen Abstand zwischen einer Gelenkposition des Wettkämpfers und einer Referenzlinie beinhalten;
Anzeigen der bestimmten Bewertungsindizes in einem auszuwählenden Modus; und
Anzeige eines numerischen Wertes und einer Grafik, die dem 3D-Modellvideo überlagert sind, die einen aus den angezeigten Bewertungsindizes ausgewählten Bewertungsindex darstellen, als Hilfsinformationen.

2. Anzeigeverfahren nach Anspruch 1, ferner beinhaltend ein Erzeugen der Hilfsinformationen basierend auf einer Gelenkposition des Wettkämpfers, die basierend auf den 3D-Erfassungsdaten erlangt wird.

3. Anzeigeverfahren nach einem der Ansprüche 1 oder 2, wobei das Identifizieren ein Identifizieren eines Ereignisses der aktuell angezeigten Übung aus einer Vielzahl von Ereignissen in dem Wertungswettkampf umfasst und
das Bestimmen ein Bestimmen von Bewertungsindizes, die das aktuell angezeigte Element betreffen, basierend auf einem Satz des aktuell angezeigten Elements und des identifizierten Ereignisses umfasst.

4. Anzeigeprogramm, das, wenn es von einem Computer (500) ausgeführt wird, den Computer dazu veranlasst, das Anzeigeverfahren nach einem der Ansprüche 1 bis 3 vorzunehmen.

5. Informationsverarbeitungsvorrichtung (100), umfassend:
eine Erlangungseinheit (150a), die dazu konfiguriert ist, ein Erkennungsergebnis zu erlangen, das erkannte Elemente und eine Startzeit und eine Endzeit jedes der erkannten Elemente beinhaltet, wobei die Elemente in einer Übung eines Wertungswettkampfs durchgeführt werden, der von einem Wettkämpfer durchgeführt wird, und die erkannten Elemente basierend auf Skelettdaten erkannt wurden, die basierend auf 3D-Koordinaten einer Gelenkposition des Wettkämpfers erhalten werden, wobei die 3D-Koordinaten basierend auf 3D-Erfassungsdaten, die durch Erfassen der Übung erlangt werden, und Elementwörterbuchdaten erhalten werden, in denen Merkmale von in dem Wertungswettkampf durchgeführten Elementen definiert sind, wobei ein Element erkannt wird, wenn die Skelettdaten mit den Merkmalen des Elements übereinstimmen, und das Element ein Wertungsobjekt ist;
eine Identifizierungseinheit (150c), die dazu konfiguriert ist, auf einer Anzeigeeinheit (130) ein 3D-Modellvideo anzuzeigen, das ein Video von 3D-Modelldaten ist, die basierend auf den Skelettdaten erhalten werden, und ein aktuell in dem 3D-Modellvideo angezeigtes Element basierend auf einer Wiedergabezeit des 3D-Modellvideos und der Startzeit und der Endzeit des in dem Erkennungsergebnis beinhalteten Elements zu identifizieren;
eine Bestimmungseinheit (150d), die dazu konfiguriert ist, Bewertungsindizes, die das aktuell angezeigte Element betreffen, aus einer Vielzahl von Bewertungsindizes zu bestimmen, die jeweils eine Wertung eines in dem Wertungswettkampf durchgeführten Elements bestimmen und einen Kniewinkel, einen Ellbogenwinkel, einen Abstand zwischen Knien und einen Abstand zwischen einer Gelenkposition des Wettkämpfers und einer Referenzlinie beinhalten; und
einen Anzeigesteuerung (150b), die dazu konfiguriert ist, die bestimmten Bewertungsindizes in einem auszuwählenden Modus anzuzeigen und einen numerischen Wert und eine Grafik, die dem 3D-Modellvideo überlagert sind, die einen aus den angezeigten Bewertungsindizes ausgewählten Bewertungsindex darstellen, als Hilfsinformationen anzuzeigen.

6. Informationsverarbeitungsvorrichtung nach Anspruch 5, wobei die Bestimmungseinheit (150d) dazu konfiguriert ist, die Hilfsinformationen basierend auf einer Gelenkposition des Wettkämpfers zu erzeugen, die basierend auf den 3D-Erfassungsdaten erlangt wird.

7. Informationsverarbeitungsvorrichtung nach einem der Ansprüche 5 oder 6, wobei
die Identifizierungseinheit (150c) dazu konfiguriert ist, ein Ereignis der aktuell angezeigten Übung aus einer Vielzahl von Ereignissen in dem Wertungswettkampf zu identifizieren, und
die Bestimmungseinheit (150d) dazu konfiguriert ist, basierend auf einem Satz des aktuell angezeigten Elements und des identifizierten Ereignisses Bewertungsindizes zu bestimmen, die das aktuell angezeigte Element betreffen.

## Revendications

1. Procédé d'affichage réalisé par un ordinateur (500), le procédé d'affichage comprenant :
l'acquisition d'un résultat de reconnaissance qui comporte des éléments reconnus ainsi qu'une heure de début et une heure de fin pour chacun des éléments reconnus, dans lequel les éléments sont réalisés lors d'un exercice d'une compétition avec notation réalisée par un concurrent et les éléments reconnus ont été reconnus sur la base de données squelettiques qui sont obtenues sur la base de coordonnées 3D d'une position articulaire du concurrent, les coordonnées 3D étant obtenues sur la base de données de détection 3D qui sont acquises par la détection de l'exercice, et de données de dictionnaire d'éléments dans lesquelles des caractéristiques des éléments réalisés lors de la compétition avec notation sont définies, dans lequel un élément est reconnu lorsque les données squelettiques correspondent aux caractéristiques de l'élément, et l'élément est un objet de notation ;
l'affichage d'une vidéo de modèle 3D qui est une vidéo de données de modèle 3D qui sont obtenues sur la base des données squelettiques, et l'identification d'un élément actuellement affiché dans la vidéo de modèle 3D, sur la base de l'heure de lecture de la vidéo de modèle 3D et de l'heure de début et de l'heure de fin de l'élément compris dans le résultat de reconnaissance ;
la détermination d'indices d'évaluation liés à l'élément actuellement affiché, parmi une pluralité d'indices d'évaluation qui déterminent chacun une notation d'un élément réalisé dans la compétition avec notation et comportent un angle de genou, un angle de coude, une distance entre les genoux et une distance entre une position articulaire du concurrent et une ligne de référence ;
l'affichage des indices d'évaluation déterminés dans un mode pour qu'ils soient sélectionnables ; et
l'affichage, à titre d'information auxiliaire, d'une valeur numérique et d'un graphique superposés à la vidéo de modèle 3D qui représentent un indice d'évaluation sélectionné parmi les indices d'évaluation affichés.

2. Procédé d'affichage selon la revendication 1, comportant en outre la génération d'informations auxiliaires basées sur une position articulaire du concurrent acquise sur la base des données de détection 3D.

3. Procédé d'affichage selon l'une quelconque des revendications 1 ou 2, dans lequel
l'identification comprend l'identification d'un événement de l'exercice actuellement affiché, parmi une pluralité d'événements de la compétition avec notation, et
la détermination comprend la détermination, sur la base d'un ensemble de l'élément actuellement affiché et de l'événement identifié, d'indices d'évaluation liés à l'élément actuellement affiché.

4. Programme d'affichage qui, lorsqu'il est exécuté par un ordinateur (500), amène l'ordinateur à mettre en œuvre le procédé d'affichage selon l'une quelconque des revendications 1 à 3.

5. Appareil de traitement d'informations (100) comprenant :
une unité d'acquisition (150a) configurée pour acquérir un résultat de reconnaissance qui comporte des éléments reconnus ainsi qu'une heure de début et une heure de fin pour chacun des éléments reconnus, dans lequel les éléments sont réalisés lors d'un exercice d'une compétition avec notation réalisée par un concurrent et les éléments reconnus ont été reconnus sur la base de données squelettiques qui sont obtenues sur la base de coordonnées 3D d'une position articulaire du concurrent, les coordonnées 3D étant obtenues sur la base de données de détection 3D qui sont acquises par la détection de l'exercice, et de données de dictionnaire d'éléments dans lesquelles des caractéristiques des éléments réalisés lors de la compétition avec notation sont définies, dans lequel un élément est reconnu lorsque les données squelettiques correspondent aux caractéristiques de l'élément, et l'élément est un objet de notation ;
une unité d'identification (150c) configurée pour afficher, sur une unité d'affichage (130), une vidéo de modèle 3D qui est une vidéo de données de modèle 3D qui sont obtenues sur la base des données squelettiques, et identifier un élément actuellement affiché dans la vidéo de modèle 3D, sur la base de l'heure de lecture de la vidéo de modèle 3D et de l'heure de début et de l'heure de fin de l'élément compris dans le résultat de reconnaissance ;
une unité de détermination (150d) configurée pour déterminer des indices d'évaluation liés à l'élément actuellement affiché, parmi une pluralité d'indices d'évaluation qui déterminent chacun une notation d'un élément réalisé dans la compétition avec notation et comportent un angle de genou, un angle de coude, une distance entre les genoux et une distance entre une position articulaire du concurrent et une ligne de référence ; et
un dispositif de commande d'affichage (150b) configuré pour afficher les indices d'évaluation déterminés dans un mode pour qu'ils soient sélectionnables et afficher, à titre d'information auxiliaire, une valeur numérique et un graphique superposés à la vidéo de modèle 3D qui représentent un indice d'évaluation sélectionné parmi les indices d'évaluation affichés.

6. Appareil de traitement d'informations selon la revendication 5, dans lequel l'unité de détermination (150d) est configurée pour générer les informations auxiliaires basée sur une position articulaire du concurrent acquise sur la base des données de détection 3D.

7. Appareil de traitement d'informations selon l'une quelconque des revendications 5 ou 6, dans lequel
l'unité d'identification (150c) est configurée pour identifier un événement de l'exercice actuellement affiché, parmi une pluralité d'événements de la compétition avec notation, et
l'unité de détermination (150d) est configurée pour déterminer, sur la base d'un ensemble de l'élément actuellement affiché et de l'événement identifié, des indices d'évaluation liés à l'élément actuellement affiché.
